# EUROPEAN PATENT SPECIFICATION

(11) **EP 3 162 970 B1**
(45) Date of publication and mention of the grant of the patent: **21.03.2018**
(21) Application number: 16194457.4
(22) Date of filing: 18.10.2016
(51) Int. Cl.: E03C 1/042, F16L 5/00

(54) **COVERING ROSETTE FOR A CONCEALED SANITARY FITTING**
ABDECKROSETTE FÜR EINE SANITÄRE UNTERPUTZARMATUR
RONDELLE DE COUVERTURE POUR APPAREIL SANITAIRE ENCASTRÉ

(30) Priority: 28.10.2015 DE 102015013926
(43) Date of publication of application: 03.05.2017
(73) Proprietor: ORAS OY, 26100 Rauma (FI)
(72) Inventor: Assenmacher, Bernd, 70597 Stuttgart (DE)
(74) Representative: Ostertag & Partner Patentanwälte mbB

(56) References cited:
- EP-A2- 1 004 711
- US-A1- 2013 312 856
- US-B1- 8 261 766

## Description

### BACKGROUND OF THE INVENTION

### 1. Field of the Invention

The invention relates to a covering rosette of a concealed sanitary fitting. The covering rosette comprises:
a) a covering hood and
b) a rosette support which supports the covering hood,
c) wherein the covering hood and the rosette support comprise a clip mechanism configured such that the covering hood can be mounted to the rosette support while allowing a rotation around a central axis.

### 2. Description of the Prior Art

Covering rosettes of this type serve for protection of the concealed sanitary fitting against spray water and simultaneously serve to cover in an artistically appealing manner the transition region between protruding handling elements of the concealed sanitary fitting and the wall section adjacent to these handling elements.

So far, most of the ornamental covering hoods of such covering rosettes had a substantially round shape when viewed from the front and therefore intrinsically had a rotational symmetry around their central axis. It was therefore normally not necessary to rotationally align the ornamental covering hood.

In the meantime, more and more ornamental covering hoods have been designed with a rectangular shape or other shapes. Therefore, a rotational misfit between a preferred direction of the ornamental covering hood, e.g. a lateral face, and a horizontal or transversal direction and/or a joint of the wall tiling has to be corrected during installation of the covering rosette.

For this purpose, an alignment system has been introduced where the ornamental covering hood is clipped onto a rosette support using a circular clipping device which allows for a certain rotational degree of freedom between the rosette support and the ornamental covering hood. The installation of such a covering rosette included fixing the rosette support using screws to the connecting member of the concealed sanitary fitting and then clipping the ornamental covering hood while aligning it. The clipping device then exerts a tensile force pressing the ornamental covering hood against the wall. The resulting frictional connection therefore prevents an unintentional rotation of the ornamental covering hood. Such a rosette is disclosed in the document US 8,261,766. However, it turned out that the frictional connection was not sufficient in certain cases, in particular if the tiling showed step joints or if larger rotational forces had been applied to the ornamental covering hood for example during cleaning of the sanitary fitting.

### SUMMARY OF THE INVENTION

It is therefore an object of the present invention to provide a covering rosette with a rotational alignment system which better prevents unintentional rotation of the ornamental covering hood.

According to the invention this object is achieved by a covering rosette mentioned at the beginning wherein:
d) the covering hood and the rosette support comprise a cam mechanism having a cam curve and a cam follower, wherein the cam curve is arranged on any one of the covering hood and the rosette support, and the cam follower is arranged on the respective other of the covering hood and the rosette support, and in that
e) the cam mechanism is configured such that it sets an angular relation between the covering hood and the rosette support and that this angular relation can be changed.

The invention is based on the idea that the angular relation between the covering hood and the rosette support is not or not only fixed by a force-fit connection but also by a form-fit connection. Such a form-fit connection may be achieved with a cam mechanism provided independently from the clip mechanism connecting the covering hood with the rosette support. Therefore, the tensile force holding the covering hood against the rosette support is not necessary for setting the angular relation and the cam mechanism may then be designed such that it provides a better fixing of the angular relation between the covering hood and the rosette support. Using such a cam mechanism the angular relation can be changed by moving the cam curve. This provides the necessary flexibility for aligning the orientation around the central axis of the covering hood.

In order to have a sufficient flexibility for the alignment the clip mechanism and the cam mechanism should advantageously allow a rotational freedom of at least ±2°, in particular at least ±3°.

Advantageously, the cam mechanism is a worm gear comprising a worm gear shaft having a spiral path forming the cam curve interacting with the cam follower. Using a worm gear it is particularly easy to provide a cam mechanism, wherein the interacting point between the cam curve and the cam follower follows a substantially a circumferential direction with respect to the rotation between the covering hood and the rosette support.

For this purpose, the worm gear shaft may comprise a rotation axis arranged perpendicular to a radial direction with respect to the central axis. The interacting point then follows a secant of the rotation. By providing the worm gear shaft on a larger radius, the secant more closely approximates the circular rotation.

If the worm gear shaft is arranged on the rosette support and the cam follower is arranged on the covering hood, one has the usual flexibility for designing the covering hood, because the cam follower is generally only a small pin, rip or the like. Furthermore, the producer may provide a more expensively produced universal rosette support comprising the movable cam curve for different ornamental covering hoods.

Advantageously, the rosette support comprises holding clips configured to rotatably hold the worm gear shaft. This allows for an easier assembly of the rosette support reducing production costs.

Advantageously, the cam mechanism is self-locking. This may be achieved by designing the cam curve such that the cam follower may not move the cam curve, e.g. the pitch of the spiral path of the worm gear is small enough, to prevent driving of the worm gear shaft by a movement of the cam follower. Self-locking prevents any unintentional rotations of the covering hood caused by external forces.

Advantageously, the cam curve is formed on a cam curve element movable with respect to the component it is arranged on, namely the covering hood respectively the rosette support. The cam curve element may be shifted and/or rotated. In particular, the mechanism for moving the cam curve element should be configured such that a user may easily access the movement. In particular, the cam curve element should be movable without using tools.

Advantageously, cam mechanism comprises markings corresponding to predetermined angular relations between the covering hood and the rosette support. Bearing in mind that usually the alignment procedure takes place with the covering hood at least loosely fixed on the rosette support, the covering hood normally covers the cam mechanism. Therefore, the markings provide auxiliary means for transferring information gained regarding the alignment from the outside to the inside of the covering hood by providing a scale for the alignment. In particular, the each marking may correspond to 1° misfits.

In order to define a centered configuration for the cam mechanism, the markings may comprise an emphasized mid range marking. The rosette support may be shipped with the cam mechanism set in this centered configuration. In this case, changing the configuration of the cam mechanism is only necessary if the rosette support is installed with a misfit.

For providing a connection between the covering hood and the rosette support which allows a rotation, the clip mechanism may comprise an arc shaped clip element interacting with a corresponding counter clip element.

In order to facilitate the alignment procedure the producer may ship an alignment hood which may be mounted and dismounted more easily at the rosette support than the normal covering hood and/or which has an opening allowing the user access to the cam mechanism. Such an alignment hood may comprise an abutment shoulder or the like configured to receive a level or other alignment tools. This abutment shoulder preferably has the same relation to a cam follower provided at the alignment hood as e.g. a lateral face has to the cam follower for a normal ornamental covering hood. The alignment hood is then used to determine the position of the cam curve, in particular by turning the worm gear shaft, in a possibly iterative process before the ornamental covering hood is finally mounted in the already determined angular relation. The alignment hood may be realized e.g. by modification of the clip element provided at the covering hood for the clip mechanism, namely by removing any clip projection while still keeping the general shape for interaction with the counter clip element.

### BRIEF DESCRIPTION OF THE DRAWINGS

Various features and advantages of the present invention may be more readily understood from the following detailed description referring to accompanying drawings in which:
- Fig. 1: shows a front view of concealed sanitary fitting having a covering rosette according to the invention;
- Fig. 2: shows a side view of the concealed sanitary fitting;
- Fig. 3: shows a partial sectional view along cut planes B-B shown in Fig. 1;
- Fig. 4: shows a back view of an ornamental covering hood of the covering rosette;
- Fig. 5: shows a sectional view along cut plane C-C of Fig. 4;
- Fig. 6: shows a prospective view of the ornamental covering hood;
- Fig. 7: shows a front view of a rosette support of the covering rosette;
- Fig. 8: shows a side view of the rosette support;
- Fig. 9: shows another side view of the rosette support;
- Fig. 10: shows a back view of the rosette support;
- Fig. 11: shows a sectional view along cut planes A-A of Fig. 7;
- Fig. 12: shows a prospective view of the rosette support;
- Fig. 13: shows a worm gear shaft;
- Fig. 14: shows a sectional view through the covering hood mounted on the rosette support along a cut plane slightly above the rosette support;
- Fig. 15: shows a zoom view marked with Y in Fig. 14;
- Fig. 16: shows a sectional view through the covering hood mounted on the rosette support in a slightly rotated configuration;
- Fig. 17: shows a zoom view marked with Z in Fig. 16.

### DETAILED DESCRIPTION OF PREFERRED EMBODIMENTS

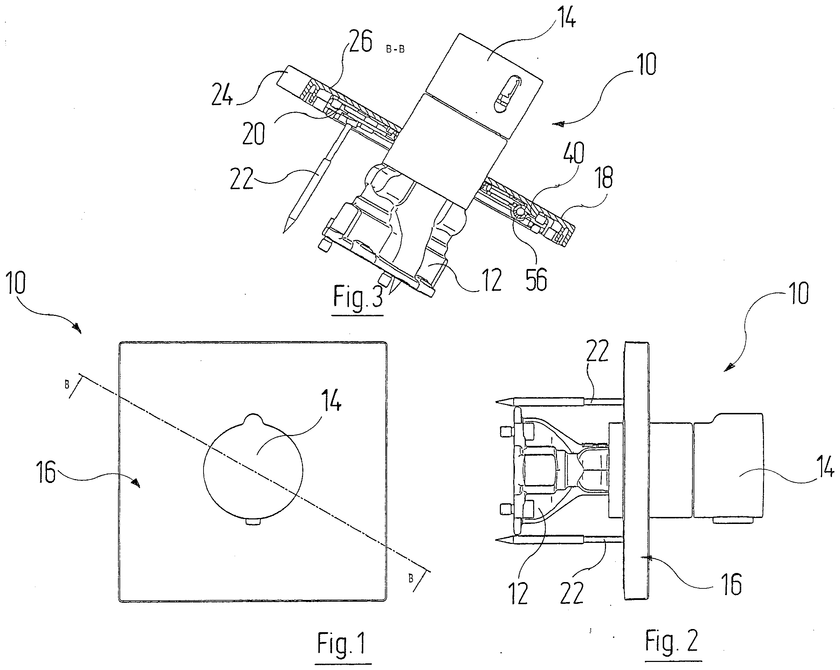

Figures 1 to 3 show a concealed sanitary fitting 10, comprising a valve function unit 12 which will be concealed in an installation recess (not shown) of a sanitary installation. The concealed sanitary fitting 10 further comprises a handling element 14 protruding from the installation recess.

Around the handling element 14 the concealed sanitary fitting 10 comprises a covering rosette 16, which is used to conceal any gaps between the front wall of the installation recess and the region of passage of the handling element 14.

As can be seen from figure 3, the covering rosette 16 comprises an ornamental covering hood 18 as well as a rosette support 20 which supports the covering hood 18.

The rosette support 20 is fixed in front of the installation recess using screws 22. For this purpose, the self-cutting screws 22 are screwed into holes provided in an already installed connecting base member (not shown) of the concealed sanitary fitting 10. Alternatively, the rosette support 20 may be fixed using boreholes and rawlplugs provided in the wall of the installation recess.

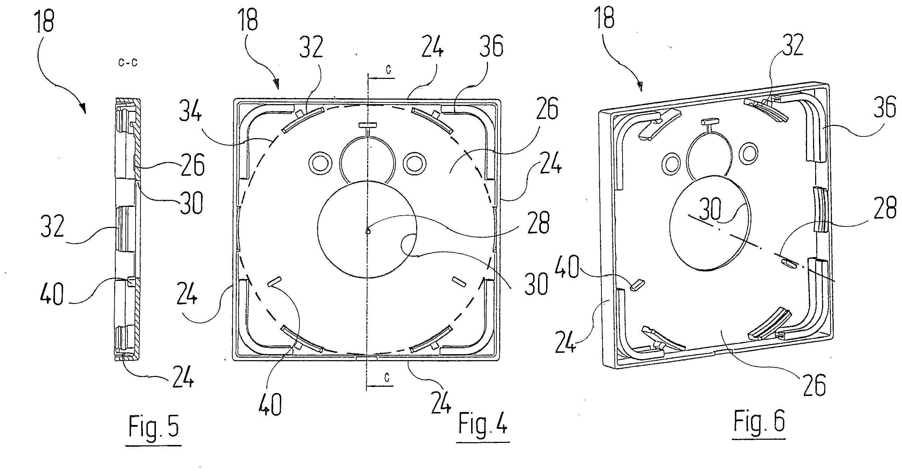

As can be seen from figure 4 to 6, the covering hood 18 has a substantially quadratic shape in the present embodiment. The covering hood 18 comprises four lateral faces 24 which protrude about 0,5 cm to 2 cm from the backside of a quadratic base plate 26 and which conceal any inner elements provided at the backside of the covering hood 18. The quadratic base plate 26 has a central axis 28 and comprises a through hole 30 around the central axis 28 providing a passage for the operating element 14.

The covering hood 18 further comprises six circumferentially equally distributed arc shaped clip elements 32 defining a mounting circle 34 shown by a dashed line and centered around the central axis 28 of the ornamental covering hood 18.

Furthermore, the covering hood 18 comprises in each corner of the base plate 26 abutment lip portions 36 which are produced of elastic material and which protrude only slightly beyond the lateral faces 24.

Finally, the ornamental covering hood 18 shows a cam follower element 40. The cam follower element 40 protrudes from the base plate 26 and is arranged near the mounting circle 34. In particular, the cam follower element 40 extends radially with respect to the mounting circle 34.

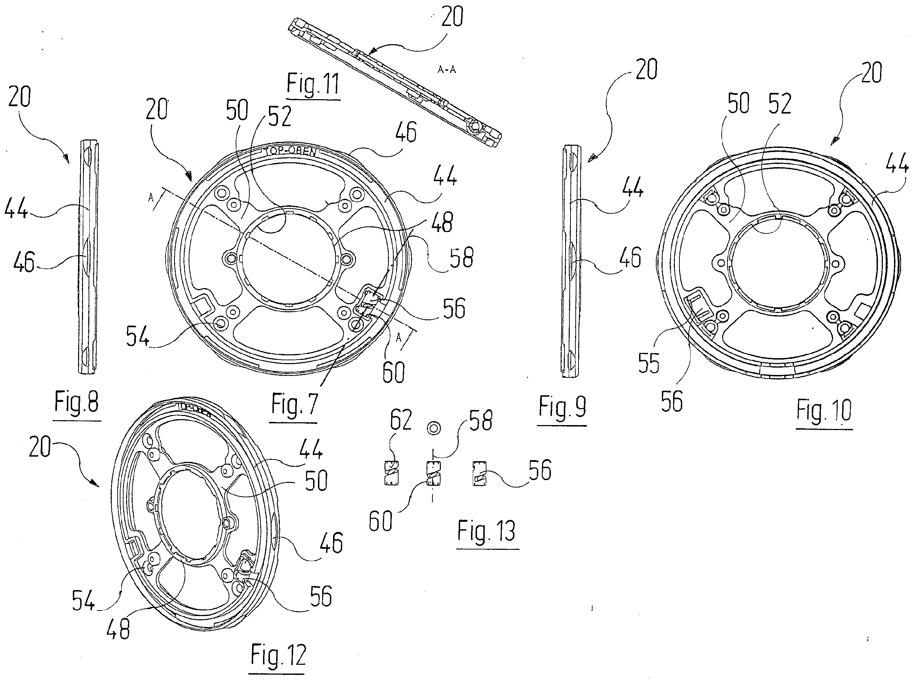

As can be seen from figure 7 to 12, the rosette support 20 comprises a mounting ring 44 having counter clip elements 46 at corresponding angular positions with respect to the clip elements 32 of the covering hood 18. The clip elements 32 together with the counter clip elements 46 form a clip mechanism for mounting the covering hood 18 to the rosette support 20 while allowing a rotation of the covering hood 18 around its central axis 28. In particular, the clip mechanism is configured to provide a range of at least ±3° for the angular relation of the covering hood 18 with respect to the rosette support 20. For this purpose, either the clip elements 32 or the counter clip elements 46 comprise a constant sectional profile along the circumference of the mounting circle 34. In the present case, this can particularly be seen for the arc shaped clip elements 32.

Furthermore, the rosette support 20 comprises an inner support structure with a hub 48 and four spokes 50, wherein the hub 48 comprises a through hole 52 providing a passage for the handling element 14 of the concealed sanitary fitting 10.

For mounting the rosette support 20 in front of the installation recess the rosette support 20 comprises several screw holes 54. These screw holes 54 are arranged on the spokes 50 and receive the screws 22 described above.

Finally, the rosette support 20 comprises holding clips 55 for holding a rotatable worm gear shaft 56 shown in more detail in figure 13 (four views).

The worm gear shaft 56 has a substantially cylindrical shape extending along a rotation axis 58. For interaction with the cam follower element 40 the worm gear shaft 56 comprises a spiral groove path 60 around its circumference. Additionally, the worm gear shaft 56 comprises markings 62 circumferentially distributed near at least one of its end faces.

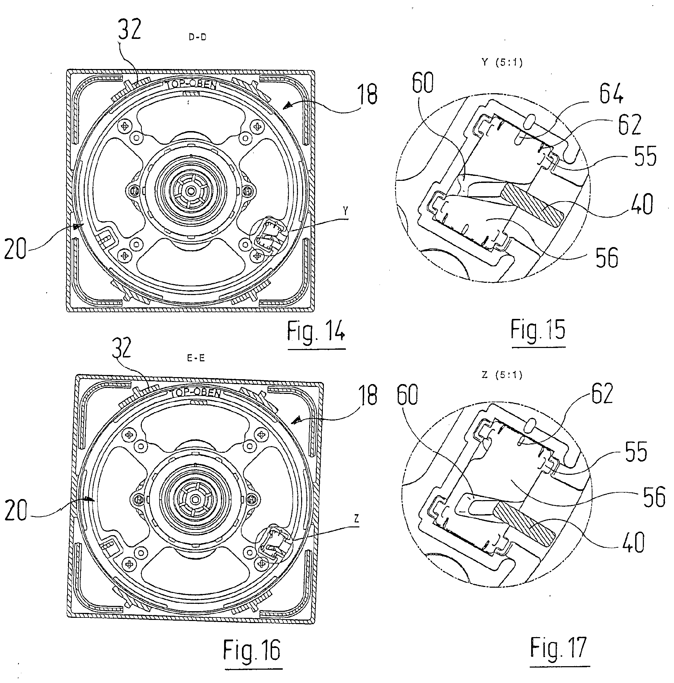

The worm gear shaft 56 is arranged in the rosette support 20 such that its rotation axis 58 is arranged perpendicular to the radius of the mounting ring 44. In particular, the rotation axis 58 of the worm gear shaft 56 is arranged in a plane parallel to mounting ring 44. With respect to the covering hood 18 the worm gear shaft 56 is arranged near the mounting circle 34 such that one of the cam follower elements 40 interacts with the spiral groove path 60 as a cam curve when the covering hood 18 is clipped on the mounting ring 44 (compare figures 14-17). The cam follower element 40 and the rotatable worm gear shaft 56 together form a worm gear as a cam mechanism which is configured such that it sets an angular relation between the covering hood 18 and the rosette support 20. In particular this angular relation can be changed by moving the cam curve.

The alignment procedure for aligning the covering rosette 16 then is as follows:
The rosette support 20 is shipped with the worm gear shaft 56 arranged in such a rotational configuration that the cam follower element 40 slips into the spiral groove path 60 when the ornamental covering hood 18 is clipped on the mounting ring 40 in such a way that the cam follower element 40 is centered with respect to the full range of the worm gear. Furthermore, in this configuration any preferred direction of the covering hood 18 is aligned with the rosette support 20, in particular the screws 22.

If one now assumes that the rosette support 20 is fixed in an already aligned orientation with respect to any horizontal and/or vertical directions and/or any joints of the wall tiling, no further alignment is needed. This is for example the case, if the connecting member of the concealed sanitary fitting 10 has already been installed in an aligned manner.

However, if the rosette support 20 has been fixed with a slight rotational misfit, the user may rotate the worm gear shaft 56 as can be seen from figure 16. This leads to a movement of the spiral groove path 60 such that the cam follower element 40 of the covering hood 18 has to be shifted in an angular direction when clipping the covering hood 18 on the rosette support 20. Therefore, the ornamental covering hood 18 has to be rotated slightly with respect to the rosette support 20. Consequently, by choosing a certain rotation configuration for the worm gear shaft 56 the angular relation between the covering hood 18 and the rosette support 20 is set.

One may now understand that the markings 60 on the worm gear shaft 56 are spaced apart such that they correspond to a rotation of 1° between the covering hood 18 and the rosette support. For the centered factory setting of the worm gear shaft 56 the markings 60 may comprise an emphasized center range marking 64 (compare Fig. 15).

By providing a spiral groove path 60 with an appropriate pitch and an appropriate diameter around the worm gear shaft 56 one may choose a self-locking cam mechanism arrangement wherein the transmittal of forces from the cam follower element 40 causing a rotation of the worm gear shaft 56 is prevented. Generally, the self-locking is stronger for smaller pitches and larger diameters. Therefore, a once aligned ornamental covering hood 18 is fixed against any unintentional rotational forces.

As a modification, further cam mechanisms may be used to achieve the inventive object. For example, the worm gear shaft 56 could be provided at the covering hood 18 and in turn the cam follower element 40 could be provided at the rosette support 20 according to a kinematic reversal. It would also be possible to have an excenter pin on a turning plate working together with a slide groove as a self-locking cam mechanism.

## Claims

1. A covering rosette (16) for a concealed sanitary fitting (10) comprising:
a) a covering hood (18) and
b) a rosette support (20) which supports the covering hood (18),
c) wherein the covering hood (18) and the rosette support (20) comprise a clip mechanism (32, 46) configured such that the covering hood (18) can be mounted to the rosette support (20) while allowing a rotation around a central axis (28)
**characterized in that**
d) the covering hood (18) and the rosette support (20) comprise a cam mechanism (40, 60) having a cam curve (60) and a cam follower (40), wherein the cam curve (60) is arranged on any one of the covering hood (18) and the rosette support (20), and the cam follower (40) is arranged on the respective other of the covering hood (18) and the rosette support (20), and **in that**
e) the cam mechanism (40, 60) is configured such that it sets an angular relation between the covering hood (18) and the rosette support (20) and that this angular relation can be changed.

2. The covering rosette according to claim 1, **characterized in that** the cam mechanism is a worm gear comprising a worm gear shaft (56) having a spiral path (60) forming the cam curve interacting with the cam follower (40).

3. The covering rosette according to claim 2, **characterized in that** the worm gear shaft (56) comprises a rotation axis (58) arranged perpendicular to a radial direction with respect to the central axis (28).

4. The covering rosette according to one of claims 2 or 3, **characterized in that** the worm gear shaft (56) is arranged on the rosette support (20) and the cam follower (40) is arranged on the covering hood (18).

5. The covering rosette according to claim 4, **characterized in that** the rosette support (20) comprises holding clips (55) configured to rotatably hold the worm gear shaft (56).

6. The covering rosette according to any of the preceding claims, **characterized in that** the cam mechanism (40, 60) is self-locking.

7. The covering rosette according to any of the preceding claims, **characterized in that** the cam curve (60) is formed on a cam curve element (56) movable with respect to the component it is arranged on, namely the covering hood (18) respectively the rosette support (20).

8. The covering rosette according to any of the preceding claims, **characterized in that** the cam mechanism (40, 60) comprises markings (62, 64) corresponding to predetermined angular relations between the covering hood (18) and the rosette support (20).

9. The covering rosette according to any of the preceding claims, **characterized in that** the markings (62) comprise an emphasized mid range marking (64).

10. The covering rosette according to any of the preceding claims, **characterized in that** the clip mechanism (32, 46) comprises an arc shaped clip element (32) interacting with a corresponding counter clip element (46).

## Patentansprüche

1. Eine Abdeckrosette (16) für eine sanitäre Unterputzarmatur (10) mit
a) einer Abdeckhaube (18) und
b) einem Rosettenträger (20), welcher die Abdeckhaube (18) trägt,
c) wobei die Abdeckhaube (18) und der Rosettenträger (20) einen Klips-Mechanismus (32, 46) aufweisen, der derart eingerichtet ist, dass die Abdeckhaube (18) auf dem Rosettenträger (20) montiert werden kann und dabei die Möglichkeit zur Drehung um eine Zentralachse (28) gegeben ist,
**dadurch gekennzeichnet, dass**
d) die Abdeckhaube (18) und der Rosettenträger (20) einen Kurvengetriebe-Mechanismus (40, 60) mit einer Steuerkurve (60) und einem Mitnehmer (40) aufweisen, wobei die Steuerkurve (60) an der Abdeckhaube (18) oder dem Rosettenträger (20) angeordnet ist und der Mitnehmer (40) an dem jeweils anderen, d.h. dem Rosettenträger (20) bzw. der Abdeckhaube (18), angeordnet ist, und dadurch, dass
e) der Kurvengetriebe-Mechanismus (40, 60) derart eingerichtet ist, dass dieser eine Winkelbeziehung zwischen der Abdeckhaube (18) und dem Rosettenträger (20) festlegt und dass diese Winkelbeziehung verändert werden kann.

2. Die Abdeckrosette nach Anspruch 1, **dadurch gekennzeichnet, dass** der Kurvengetriebe-Mechanismus ein Schneckengetriebe ist, das eine Schneckengetriebewelle (56) mit einem Wendelpfad (60) aufweist, welcher die Steuerkurve ausbildet, die mit dem Mitnehmer (40) wechselwirkt.

3. Die Abdeckrosette nach Anspruch 2, **dadurch gekennzeichnet, dass** die Schneckengetriebewelle (56) eine Rotationsachse (58) aufweist, die senkrecht zu einer radialen Richtung bezüglich der Zentralachse (28) angeordnet ist.

4. Die Abdeckrosette nach einem der Ansprüche 2 oder 3, **dadurch gekennzeichnet, dass** die Schneckengetriebewelle (56) an dem Rosettenträger (20) angeordnet ist und der Mitnehmer (40) an der Abdeckhaube (18) angeordnet ist.

5. Die Abdeckrosette nach Anspruch 4, **dadurch gekennzeichnet, dass** der Rosettenträger (20) Halteclips (55) aufweist, die dazu eingerichtet sind, die Schneckengetriebewelle (56) drehbar zu halten.

6. Die Abdeckrosette nach einem der vorhergehenden Ansprüche, **dadurch gekennzeichnet, dass** der Kurvengetriebe-Mechanismus (49, 60) selbsthemmend ist.

7. Die Abdeckrosette nach einem der vorhergehenden Ansprüche, **dadurch gekennzeichnet, dass** die Steuerkurve (60) an einem Steuerkurvenelement (56) ausgebildet ist, das bezüglich der Komponente, an welcher es angeordnet ist, nämlich der Abdeckhaube (18) bzw. dem Rosettenträger (20), beweglich ist.

8. Die Abdeckrosette nach einem der vorhergehenden Ansprüche, **dadurch gekennzeichnet, dass** der Kurvengetriebe-Mechanismus (40, 60) Markierungen (62, 64) aufweist, die vorgegebenen Winkelbeziehungen zwischen der Abdeckhaube (18) und dem Rosettenträger (20) entsprechen.

9. Die Abdeckrosette nach einem der vorhergehenden Ansprüche, **dadurch gekennzeichnet, dass** die Markierungen (62) eine hervorgehobene Bereichsmittenmarkierung (64) aufweisen.

10. Die Abdeckrosette nach einem der vorhergehenden Ansprüche, **dadurch gekennzeichnet, dass** der Klips-Mechanismus (32, 46) ein bogenförmiges Klipselement (32) aufweist, welches mit einem entsprechenden Gegenklipselement (46) wechselwirkt.

## Revendications

1. Rosace de recouvrement (16) pour un appareil sanitaire encastré (10) comprenant :
a) un capot de recouvrement (18) et
b) un support de rosace (20), lequel supporte le capot de recouvrement (18),
c) où le capot de recouvrement (18) et le support de rosace (20) comprennent un mécanisme de fixation par emboîtement (32, 46) configuré de telle sorte que le capot de recouvrement (18) peut être monté sur le support de rosace (20) tout en permettant une rotation autour d'un axe central (28)
**caractérisée en ce que**
d) le capot de recouvrement (18) et le support de rosace (20) comprennent un mécanisme de came (40, 60) ayant une courbe de came (60) et un suiveur de came (40), où la courbe de came (60) est agencée sur un premier élément quelconque parmi le capot de recouvrement (18) et le support de rosace (20), et le suiveur de came (40) est agencé sur l'autre élément respectif parmi le capot de recouvrement (18) et le support de rosace (20), et **en ce que**
e) le mécanisme de came (40, 60) est configuré de telle sorte qu'il établit une relation angulaire entre le capot de recouvrement (18) et le support de rosace (20) et de telle sorte que cette relation angulaire peut être modifiée.

2. Rosace de recouvrement selon la revendication 1, **caractérisée en ce que** le mécanisme de came est un engrenage à vis sans fin comprenant un arbre d'engrenage à vis sans fin (56) ayant un trajet en spirale (60) formant la courbe de came coopérant avec le suiveur de came (40).

3. Rosace de recouvrement selon la revendication 2, **caractérisée en ce que** l'arbre d'engrenage à vis sans fin (56) comprend un axe de rotation (58) agencé perpendiculairement à une direction radiale par rapport à l'axe central (28).

4. Rosace de recouvrement selon l'une des revendications 2 ou 3, **caractérisée en ce que** l'arbre d'engrenage à vis sans fin (56) est agencé sur le support de rosace (20) et le suiveur de came (40) est agencé sur le capot de recouvrement (18).

5. Rosace de recouvrement selon la revendication 4, **caractérisée en ce que** le support de rosace (20) comprend des fixations à emboîtement de maintien (55) configurées pour maintenir avec possibilité de rotation l'arbre d'engrenage à vis sans fin (56).

6. Rosace de recouvrement selon l'une quelconque des revendications précédentes, **caractérisée en ce que** le mécanisme de came (40, 60) est autobloquant.

7. Rosace de recouvrement selon l'une quelconque des revendications précédentes, **caractérisée en ce que** la courbe de came (60) est formée sur un élément de courbe de came (56) mobile par rapport au composant sur lequel il est agencé, à savoir le capot de recouvrement (18) ou le support de rosace (20).

8. Rosace de recouvrement selon l'une quelconque des revendications précédentes, **caractérisée en ce que** le mécanisme de came (40, 60) comprend des repères (62, 64) correspondant à des relations angulaires prédéterminées entre le capot de recouvrement (18) et le support de rosace (20).

9. Rosace de recouvrement selon l'une quelconque des revendications précédentes, **caractérisée en ce que** les repères (62) comprennent un repère de milieu de gamme mis en évidence (64).

10. Rosace de recouvrement selon l'une quelconque des revendications précédentes, **caractérisée en ce que** le mécanisme de fixation par emboîtement (32, 46) comprend un élément de fixation par emboîtement en forme d'arc (32) coopérant avec un élément de fixation par emboîtement apparié correspondant (46).
